# FASCICULE DE BREVET EUROPEEN

(11) **EP 1 137 597 B1**
(45) Date de publication et mention de la délivrance du brevet: **10.03.2004**
(21) Numéro de dépôt: 99956135.0
(22) Date de dépôt: 24.11.1999
(51) Int. Cl.: C01G 43/025, B01J 2/04, G21C 3/62

(54) **PREPARATION PAR ATOMISATION-SECHAGE D'UNE POUDRE COULABLE DE BIOXYDE D'URANIUM OBTENU PAR CONVERSION EN VOIE SECHE DE L'UF 6?**
HERSTELLUNG EINES FLIESSFÄHIGEN URANDIOXIDS DURCH ATOMISATIONSTROCKNEN UND MITTELS TROCKENUMSETZUNG VON UF6
PREPARATION BY SPRAY-DRYING OF A FLOWABLE URANIUM DIOXIDE POWDER OBTAINED BY DRY PROCESS CONVERSION OF UF 6?

(30) Priorité: 26.11.1998 FR 9814901
(43) Date de publication de la demande: 04.10.2001
(73) Titulaire: COMMISSARIAT A L'ENERGIE ATOMIQUE, 75752 Paris Cédex 15 (FR); COMPAGNIE GENERALE DES MATIERES NUCLEAIRES, 78140 Velizy Villacoublay (FR)
(72) Inventeur: BONNEROT, Jean-Marc, F-13540 Puyricard (FR); BRUNAUD, Laurent, F-04100 Manosque (FR); BAUER, Mireille, F-04100 Manosque (FR)
(74) Mandataire: Audier, Philippe André
(86) Numéro de dépôt international: PCT/FR1999/002894
(87) Numéro de publication internationale: WO 2000/030978

(56) Documents cités:
- EP-A- 0 447 036
- FR-A- 1 438 020
- GB-A- 1 481 711
- US-A- 3 992 494
- WADDINGTON ET AL: "development of fuel elements for the agr" NUCLEAR ENERGY, vol. 18, no. 4, août 1979 (1979-08), pages 283-287, XP002112196 london
- CHEMICAL ABSTRACTS, vol. 76, no. 18, 1 mai 1972 (1972-05-01) Columbus, Ohio, US; abstract no. 107142u, KAWATA: "uranium dioxide powder.." page 559; XP002112197 & JP 07 113384 A (TOKYO SHIBAURA ELECTRIC CO)

## Description

### Domaine technique

La présente invention a pour objet un procédé de préparation d'une poudre de bioxyde d'uranium présentant des caractéristiques physico-chimiques convenant à la préparation de combustible d'oxyde mixte d'uranium et de plutonium (MOX) utilisé dans les réacteurs à eau légère.

De façon plus précise, elle concerne l'obtention d'une poudre qui soit coulable, fine et de granulométrie étroite, destinée à être mélangée à une autre poudre (mélange primaire riche en Pu) et qui possède les caractéristiques suivantes :
- une bonne aptitude à l'écoulement spontané,
- une granulométrie homogène située dans la gamme allant de 20 à 100 µm,
- une masse volumique apparente élevée pour permettre un remplissage optimal des différents équipements utilisés pour la fabrication du combustible (broyeur, mélangeur, conteneurs, transferts, sabot d'alimentation de presse, etc.),
- des particules élémentaires suffisamment solides pour résister aux différentes sollicitations mécaniques subies en cours de fabrication (brassage par convection, remplissage et vidange de conteneurs, transfert par voie pneumatique, etc.),
- une bonne aptitude au compactage, et
- une excellente réactivité au frittage naturel.

### Etat de la technique antérieure

Actuellement, on obtient une poudre de bioxyde d'uranium présentant ces caractéristiques, en la préparant par un procédé de conversion par voie humide du nitrate d'uranyle en bioxyde d'uranium.

Cette conversion par voie humide consiste en une précipitation du diuranate d'ammonium (ADU) suivie ou non d'un broyage à la granulométrie appropriée, comme il est décrit dans US-A-3 394 997 [1], et US-A-3 998 925 [2].

Le document FR-A-2 088 170 [3] décrit un procédé de conversion de nitrate d'uranyle en bioxyde d'uranium frittable par pulvérisation-séchage d'une solution de nitrate d'uranyle et d'acide formique, suivie d'une calcination.

Les poudres obtenues par ces procédés de conversion par voie humide, peuvent être utilisées directement pour la fabrication industrielle du combustible MOX sans qu'il soit nécessaire d'effectuer une étape complémentaire de granulation mécanique de la poudre.

En effet, les poudres présentent des propriétés d'écoulement excellentes, qui confèrent au mélange final UO₂-PuO₂ une fluidité suffisante pour supporter des cadences de production élevées.

En revanche, le procédé de préparation de bioxyde d'uranium utilisant la conversion par voie sèche de l'hexafluorure d'uranium UF₆ en UO₂, tel que décrit dans FR-A-2 060 242 [4] et FR-A-2 064 351 [5], ne permet pas actuellement d'obtenir une poudre utilisable directement pour la fabrication de combustibles MOX. La conversion par voie sèche de UF₆ s'effectue industriellement dans un four compact et met en jeu consécutivement deux réactions :
- la première est la réaction d'hydrolyse qui transforme UF₆ gazeux en oxyfluorure d'uranium solide UO₂F₂,
- la seconde concerne la pyrohydrolyse réductrice de UO₂F₂ qui conduit à la formation de UO₂ sous forme pulvérulente.

La poudre de UO₂ réalisée selon le procédé décrit dans [4] et [5] est difficilement utilisable pour la préparation de combustibles MOX car elle est généralement cohésive et présente une faible masse volumique apparente, ce qui rend son utilisation directe très délicate pour une application industrielle en raison de son comportement au compactage très médiocre.

Lorsqu'on utilise ce procédé des références [4] et [5] pour préparer des combustibles à base de UO₂ pour les réacteurs, on réalise ensuite une granulation de la poudre par un procédé mécanique qui comprend un pré-compactage de la poudre, suivi d'un concassage, puis d'un tamisage afin d'obtenir un granulé mécanique présentant de bonnes propriétés d'écoulement, qui dans certains cas est soumis à une opération de sphéroïdisation pour accroître encore la coulabilité de la poudre. Cette granulation mécanique conduit à des granulométries élevées pouvant atteindre et même dépasser 500 µm.

Une autre technique de granulation de poudre de UO₂ a été décrite dans FR-A-1 438 020 [6]. Dans ce cas, on prépare une pâte en mélangeant une poudre de UO₂ ou UO₂-PuO₂ avec une solution d'un liant dans un solvant organique à teneur très basse en hydrogène, tel que le trichloréthylène, puis on sèche cette pâte par pulvérisation. On obtient ainsi des granulés de grande dimension atteignant 250 µm.

Pour la fabrication du combustible MOX, où un mélange intime des deux constituants (poudre de UO₂ et poudre de PuO₂) est recherché, des granulométries aussi élevées pour UO₂ sont à proscrire. Une taille de particules de UO₂ inférieure à 100 µm est indispensable pour atteindre les spécifications requises pour ce combustible.

La présente invention a précisément pour objet un procédé de traitement d'une poudre de bioxyde d'uranium obtenu par voie sèche pour la convertir en une poudre utilisable directement pour la fabrication de combustible MOX.

### Exposé de l'invention

Selon l'invention, le procédé de préparation d'une poudre de bioxyde d'uranium UO₂ frittable comprend les étapes suivantes :
- 1) préparer une suspension aqueuse d'une poudre de UO₂ obtenue par voie sèche à partir d'hexafluorure d'uranium, ladite suspension comprenant 50 à 80 % en poids de UO₂, au moins un agent défloculant et au moins un additif choisi parmi le peroxyde d'hydrogène H₂O₂ et une poudre de U₃O₈, en quantité telle que la viscosité de la suspension ne dépasse pas 250 mPa.s, et
- 2) atomiser cette suspension et la sécher dans un gaz chaud, à une température de 150 à 300°C, pour obtenir une poudre de UO₂ appauvri ayant une granulométrie moyenne de 20 à 100 µm.

Dans ce procédé, on prépare tout d'abord une suspension aqueuse de poudre de bioxyde d'uranium, comportant un taux de matière sèche très élevé, mais présentant une viscosité la plus faible possible, ne dépassant pas 250 mPa.s, pour qu'elle convienne à l'opération suivante d'atomisation-séchage de la suspension en granulés calibrés.

Le fait d'utiliser l'eau pour préparer la suspension est très intéressant car il permet de limiter à des valeurs très faibles les quantités de produits organiques susceptibles d'introduire des impuretés dans le produit final.

Selon l'invention, la méthode de préparation de la suspension peut être simple, de courte durée, reproductible, et conduire à des suspensions très fluides qui peuvent être véhiculées par pompage jusqu'à la buse d'injection de l'atomiseur sans difficultés. On peut atteindre des taux de matière sèche très élevés pour obtenir ensuite des particules de poudre denses, pleines et bien sphériques. De plus, ce procédé est transposable à une unité de production de capacité industrielle.

Pour la préparation de cette suspension, on utilise généralement au moins deux additifs constitués respectivement :
- 1) par au moins un agent défloculant, et
- 2) par au moins un additif choisi parmi le peroxyde d'hydrogène et une poudre de U₃O₈, ces derniers additifs jouant tous le rôle de liant lors de l'opération d'atomisation-séchage.

Dans le document EP-A-0 092 475 [7], on a décrit l'utilisation de peroxyde d'hydrogène pour améliorer la résistance à la compression de pastilles crues de UO₂ ou UO₂-PuO₂ par formation d'une couche d'oxyde hydraté sur la poudre de départ. Cette couche est formée en pulvérisant une solution de H₂O₂ sur la poudre d'oxyde métallique, la quantité de solution de H₂O₂ représentant 2 à 15 % du poids de cette poudre. Dans ce cas, la quantité de H₂O₂ utilisée est importante.

L'agent défloculant a pour but de fluidifier la suspension. Il peut être constitué par un produit organique facilement éliminable, par exemple par du polyméthacrylate d'ammonium tel que le produit commercialisé par la société Polyplastic S.A. sous l'appellation de DARVAN C qui est une solution aqueuse de polyméthacrylate d'ammonium à 25 %.

La quantité pondérale d'agent défloculant utilisée (polyméthacrylate d'ammonium) représente généralement 0,03 à 0,16 % du poids de matière sèche de la suspension.

Un liant organique peut être ajouté à la suspension pour favoriser l'agglomération de la poudre au cours du séchage en atomiseur. On choisit des liants organiques qui peuvent être facilement éliminés. A titre d'exemples de tels liants, on peut citer l'alcool polyvinylique et le polyéthylène glycol.

L'eau oxygénée peut jouer le même rôle qu'un liant organique, et il en est de même pour une poudre de U₃O₈, mais dans les deux cas, il peut être avantageux d'ajouter également un liant organique en faible proportion.

Aussi, selon un premier mode de réalisation, la solution comprend un agent défloculant et du peroxyde d'hydrogène H₂O₂, sans liant organique, la quantité pondérale de H₂O₂ représentant 0,2 à 0,4 % du poids de matière sèche de la suspension. L'eau oxygénée peut être additionnée sous forme de solution aqueuse à 20 % de H₂O₂, par exemple.

Selon un second mode de réalisation de l'invention, la suspension comprend un agent défloculant, du peroxyde d'hydrogène et un liant organique tel que l'alcool polyvinylique, la quantité pondérale de H₂O₂ représentant 0,1 à 0,4 % du poids de matière sèche de la suspension, et la quantité pondérale de liant organique représentant 0,1 à 0,5 % du poids de matière sèche de la suspension.

Dans ces deux modes de réalisation, la quantité pondérale d'agent défloculant tel que le polyméthacrylate d'ammonium représente généralement de 0,03 à 0,16 % du poids de matière sèche de la suspension.

Dans le mode de réalisation où l'on l'utilise un liant organique, celui-ci peut être l'alcool polyvinylique ou le polyéthylène glycol.

Lorsque l'additif est constitué par une poudre de U₃O₈, celle-ci peut être obtenue par oxydation ménagée de la poudre initiale de UO₂ obtenue par voie sèche. On peut utiliser une quantité de poudre de U₃O₈ représentant 10 à 20 % du poids de UO₂, par exemple 15 %.

Dans ce cas, la suspension peut aussi comprendre un liant organique tel que ceux utilisés ci-dessus dans les proportions indiquées ci-dessus, par exemple 0,1 à 0,5 % en poids de liant organique par rapport au poids de matière sèche de la suspension, soit le poids total de UO₂ et de U₃O₈.

Selon l'invention, on peut aussi ajouter à la suspension de poudre de UO₂ et éventuellement de U₃O₈, des adjuvants de frittage sous forme de poudre tels que Cr₂O₃, TiO₂, Al₂O₃ etc... et des poisons consommables tels que Gd₂O₃ ou Er₂O₃. Ceci permet d'obtenir une dispersion uniforme de ces adjuvants et/ou poisons consommables dans la poudre de UO₂.

Selon l'invention, la matière sèche de la suspension peut donc être constituée soit par la poudre de UO₂ seul, par le mélange UO₂-U₃O₈, ou par des mélanges UO₂-poison consommable et/ou adjuvant(s) de frittage et/ou U₃O₈.

Pour la préparation de la suspension, on part d'une poudre de UO₂ obtenue par voie sèche, à l'état brut, et on ajoute graduellement l'eau, les additifs et les éventuels adjuvants à la poudre de UO₂ et éventuellement de U₃O₈, en réalisant une agitation mécanique ou une agitation ultrasonore, en une ou plusieurs étapes.

L'opération suivante d'atomisation-séchage peut être effectuée dans un dispositif d'atomisation-séchage standard, équipé par exemple d'une turbine tournant à grande vitesse (atomisation centrifuge), d'une buse alimentée sous pression (atomisation sous pression ou pneumatique) ou d'une buse d'injection ultrasonique (atomisation par sonotrode).

Le réglage de ces différents modes d'injection, soit du diamètre d'orifice de la buse, de la vitesse de rotation, de la pression d'injection ou de la fréquence des ultrasons, doit être effectué de telle manière qu'il conduise à la formation d'un brouillard de micro-gouttelettes de suspension, ayant par exemple un diamètre moyen voisin de 50 µm avec une dispersion en diamètre des gouttelettes faible, si possible de 20 à 100 µm, aucune goutte de grande taille, par exemple de l'ordre du millimètre, ne devant être formée.

L'atmosphère de séchage peut être constituée d'air ou d'un autre gaz exempt d'oxygène, par exemple l'azote ou l'argon. La température du gaz est généralement située dans la gamme allant de 150 à 300°C, tout au moins dans la zone située juste à proximité de la buse d'injection. On peut effectuer le séchage indifféremment à co-courant ou à contre-courant de l'alimentation de la suspension ou en mode mixte. La hauteur de séchage des gouttelettes est de préférence supérieure à 70 cm avec une température en bas de colonne de séchage supérieure à 100°C. On préfère des dispositifs d'atomisation-séchage possédant des hauteurs de séchage importantes de manière à obtenir un granulé final présentant un minimum d'humidité résiduelle.

Après cette opération, on obtient une poudre de UO₂ présentant les caractéristiques suivantes :
- une granulométrie homogène de 20 à 100 µm,
- une cohésivité suffisante des grains pour résister aux différentes manipulations intervenant pour la préparation de combustibles MOX,
- d'excellentes propriétés d'écoulement, soit un écoulement spontané pour 200 g de poudre dans un cône métallique muni d'un orifice de 15 mm de diamètre,
- une masse volumique apparente élevée, proche de 2 g/cm³,
- un rapport O/U inférieur à 2,15,
- un taux d'impuretés résiduelles faible,
- une bonne aptitude au compactage, et
- une excellente aptitude au frittage naturel, donnant par exemple, après frittage, une masse volumique représentant plus de 97,5 % de la masse volumique théorique.

Selon l'invention, on peut dans certains cas effectuer un traitement thermique complémentaire de la poudre obtenue par atomisation- séchage. Ce traitement peut être réalisé soit à basse température de 100 à 250°C pour éliminer l'humidité résiduelle de la poudre, soit à plus haute température de 250 à 700°C pour éliminer la totalité des impuretés résiduelles de la poudre, et régler si nécessaire le rapport O/U en utilisant une atmosphère de traitement thermique appropriée.

En ce qui concerne l'influence du traitement thermique, la morphologie des granulés évolue très peu au cours de ce traitement. En effet, ils conservent leur sphéricité et restent bien individualisés, ce qui permet de conserver d'excellentes propriétés d'écoulement.

D'autres caractéristiques et avantages de l'invention apparaîtront mieux à la lecture de la description qui suit d'exemples de réalisation, donnés bien entendu à titre illustratif et non limitatif, en référence au dessin annexé.

### Brève description du dessin.

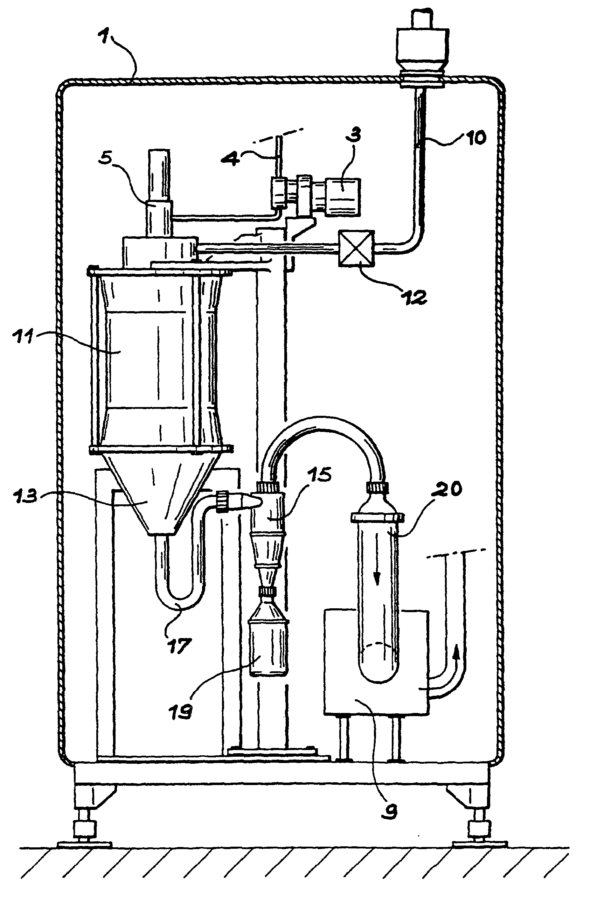

La figure 1 représente schématiquement en coupe verticale un dispositif nucléarisé d'atomisation-séchage utilisé dans l'invention. Ce dispositif est totalement implanté en boite à gants.

### Description détaillée des modes de réalisation.

### Exemple 1

Dans cet exemple, on utilise une poudre de bioxyde d'uranium provenant d'un four de conversion à injecteur concentrique tritubulaire. Cette poudre présente les caractéristiques suivantes :
- masse volumique apparente : voisine de 1 g cm⁻³,
- surface spécifique : sensiblement 2,5 m² g⁻¹.
- poudre non coulable en cône d'écoulement d'un diamètre de 15 mm,
- diamètre moyen des particules (mesuré par diffraction laser en voie humide) : sensiblement 1,5 µm avec 50 % de fines inférieures à 1 µm,
- perte au feu après frittage : proche de 0,7 % massique, et
- rapport O/U allant de 2,04 à 2,08.

A partir de cette poudre, on prépare une suspension en utilisant 60 parties en poids de poudre de UO₂ et 40 parties en poids d'eau distillée.

L'opération de mise en suspension de la poudre de UO₂ dans l'eau est effectuée de préférence en deux étapes, de manière à limiter les phénomènes de sédimentation, particulièrement accentués avec UO₂ qui présente une masse volumique intrinsèque élevée.

On introduit les 40 parties d'eau dans un conteneur en Plexiglas ou en verre ou en acier inoxydable, dont le fond ne présente pas d'arêtes vives et dont les parois sont exemptes d'aspérité. On introduit alors dans le conteneur 40 parties en poids de poudre de UO₂, graduellement en maintenant une agitation mécanique de la suspension au moyen d'un agitateur, équipé par exemple d'un disperseur de type rotor-stator, à une vitesse d'agitation de l'ordre 1000 tours/minute.

Après introduction des 40 parties en poids de poudre, on réalise une opération de désagglomération-dispersion au moyen du même disperseur à une vitesse de 1700 à 2000 tours/minutes, pendant 20 minutes.

On ajoute alors 0,09 % du poids de matière sèche de produit défloculant constitué par du polyméthacrylate d'ammonium, tout en maintenant la suspension sous agitation à une vitesse de 1000 tours/minute.

On mesure alors la viscosité de la suspension, par exemple au moyen d'un viscosimètre BROOKFIELD DVII tournant à une vitesse de 30 tours/minute, et on remarque qu'elle est inférieure à 20 mPa.s.

On ajoute alors le reste de la poudre de UO₂, soit 20 parties en poids, tout en maintenant l'agitation, avec une vitesse de rotation de l'agitateur de 1000 tours/minute.

On réalise ensuite une seconde opération de désagglomération-dispersion au moyen du même agitateur à une vitesse de 3000 tours/minute, pendant 20 minutes, et on ajoute encore 0,03 % du poids de matière sèche de polyméthacrylate d'ammonium tout en maintenant la suspension sous agitation, à une vitesse de 1000 tours/minute.

On a donc introduit au total 0,12 % du poids de matière sèche de polyméthacrylate d'ammonium jouant le rôle d'agent défloculant.

On introduit alors dans la suspension, 0,2 % du poids de matière sèche d'eau oxygénée, puis 0,4 % du poids de matière sèche d'alcool polyvinylique, après stabilisation de la viscosité de la suspension. Ces ajout sont effectués en maintenant la suspension sous agitation à une vitesse d'environ 1000 tours/minute. Ces deux constituants jouent le rôle de liant et ont pour rôle de favoriser l'agglomération de la poudre au cours du séchage en atomiseur.

Si la viscosité de la suspension n'est pas inférieure à 250 mPa.s, on ajoute une faible quantité de polyméthacrylate d'ammonium. De préférence, la viscosité de la suspension est de l'ordre d'environ 100 mPa.s.

On réalise alors la granulation de la poudre de UO₂ par atomisation-séchage de la suspension.

Ceci peut être effectué en utilisant le dispositif représenté sur la figure 1.

Sur cette figure, on voit que le dispositif comprend une enceinte 1 à l'intérieur de laquelle sont disposés :
- une pompe péristaltique 3 de transfert de la suspension introduite par 4, au pulvérisateur ultrasonique 5. Le débit de la pompe peut être ajusté entre 0 et 2 litres/heure.
- un pulvérisateur ultrasonique 5 à buse annulaire. La suspension est véhiculée jusqu'à la couronne active du pulvérisateur. Les vibrations ultrasoniques conduisent à la formation d'un treillis régulier d'ondes à la surface de liquide. Chaque pic du treillis conduit à la formation de micro-gouttelettes, dont le diamètre est directement lié à la fréquence de vibration. Plusieurs types de pulvérisations de fréquences différentes permettant de viser des granulométries comprises entre 10 et 200 µm. On utilise un pulvérisateur à 30 ou 35 kHz permettant d'atteindre des granulométries situées entre environ 30 et 50 µm. En cours de fonctionnement, le pulvérisateur est refroidi par circulation d'air à température ambiante. Par ailleurs, un circuit de refroidissement par eau réfrigérée est prévu au niveau de l'alimentation de la suspension, afin de maintenir celle-ci à basse température pendant l'injection. En effet, l'arrivée d'air chaud s'effectuant à proximité du pulvérisateur, la température ambiante au niveau de l'injecteur devient très élevée (> 100°C) et risquerait de porter à ébullition la suspension avant son injection. L'alimentation en eau réfrigérée est assurée au moyen d'un cryostat à circulation.
- un réseau de circulation d'air comportant un ventilateur-extracteur 9 situé en sortie de colonne de séchage 11. L'air aspiré en amont de l'atomiseur en 10, est porté à haute température au moyen de résistances chauffantes 12 (température réglable de 20 à 650°C). Cet air chaud est ensuite injecté à proximité du pulvérisateur ultrasonique au centre de la colonne de séchage.
- une colonne de séchage 11.
- un cône de réception métallique 13 de la poudre, raccordé à un cyclone de séparation air-particules 15 par un tube métallique en col de cygne 17. Un thermocouple situé à la base du cône de réception permet de mesurer en continu la température de l'air en sortie de colonne de séchage.
- un pot 19 de récupération du granulé sec, en partie basse du cyclone.

Un filtre à manche 20 en sortie de cyclone permet d'arrêter les particules de taille supérieure à 1 µm.

Dans ce dispositif, on injecte la suspension de dioxyde d'uranium à un débit 330 cm³/h et on forme des micro-gouttelettes d'un diamètre moyen d'environ 50 µm. On injecte de l'air au niveau de la buse d'injection à la température de 180°C environ.

La température en bas de la colonne de séchage est voisine de 130°C et la poudre de UO₂ est récupérée dans le pot 19 situé à la sortie du cyclone séparateur air-particule 15 avec un débit proche de 370 g/h. On obtient ainsi une poudre présentant les caractéristiques suivantes :
- masse volumique apparente : 1,8 g/cm³,
- masse volumique après tassement : 2,0 g/cm³.
- vitesse d'écoulement en cône d'un diamètre de 15 mm : 39g/s, et 13g/s en cône d'un diamètre de 9,5 mm, écoulement spontané,
- diamètre moyen des granulés : 30 µm,
- morphologie du granulé : granules sphériques quelquefois toriques, avec présence d'une faible proportion de fines.
- rapport O/U : 2,13.

On obtient donc une poudre présentant les caractéristiques voulues pour la fabrication de combustible MOX.

### Exemple 2

Dans cet exemple, on suit le même mode opératoire que dans l'exemple 1, mais on utilise comme liant du polyéthylène-glycol (PEG) au lieu d'alcool polyvinylique. On obtient des résultats équivalents.

### Exemple 3

Dans cet exemple, on suit le même mode opératoire que dans l'exemple 1, mais on utilise uniquement de l'eau oxygénée sans addition d'alcool polyvinylique. Dans ce cas, la proportion d'eau oxygénée représente 0,3 % du poids de matière sèche. Cette augmentation de la teneur en peroxyde d'hydrogène H₂O₂ a pour but de limiter la proportion de fines particules en l'absence de liant organique (PVA ou PEG). Elle entraîne une augmentation du rapport O/U de UO₂, ΔO/U étant de l'ordre de 0,02 par rapport à la poudre décrite dans l'exemple 1. Cependant, l'aptitude à l'écoulement de la poudre finale est inférieure à celle des poudres décrites dans les exemples 1 et 2.

### Exemple 4

Dans cet exemple, on suit le même mode opératoire que dans l'exemple 1, mais on réalise les deux opérations de désagglomération-dispersion décrites pour la préparation de la suspension, en utilisant une sonde dispersive à ultrasons à une fréquence proche de 20 kHz. La durée d'agitation est dans ce cas limitée à 10 minutes par opération, pour une puissante injectée voisine de 150 W. Avec ce mode de dispersion, la température de la suspension s'élève notablement (jusqu'à environ 80°C) et occasionne une évaporation sensible de l'eau introduite initialement. On réajuste alors la quantité d'eau pour obtenir un taux de matières sèches (soit de UO₂) de l'ordre de 60 % à la température ambiante.

Dans ces conditions, on obtient une poudre présentant des caractéristiques équivalentes à celles de l'exemple 1.

### Exemple 5

Dans cet exemple, on suit le même mode opératoire que dans l'exemple 1, mais la poudre de UO₂ comprend une proportion d'environ 15 % en masse de poudre de U₃O₈ obtenue par oxydation ménagée de la poudre initiale de UO₂.

On mélange alors les deux poudres et on les met en suspension comme dans l'exemple 1 sans addition d'eau oxygénée car U₃O₈ joue le rôle de liant de la poudre au séchage. En fonction du taux de fines obtenu après atomisation, on peut ajouter ou non une quantité représentant 0,1 à 0,5 % du poids de matière sèche d'un liant organique constitué d'alcool polyvinylique ou de PEG.

On obtient des résultats équivalents.

### Exemple 6

On prépare à partir des poudres obtenues dans les exemples 1 à 5, des pastilles d'un diamètre de 8 mm et d'une hauteur de 10 mm, par compression à froid sous une pression de 500 MPa, sans lubrification interne de la poudre, suivie d'un frittage à 1700 °C pendant 4 heures avec une vitesse de montée en température de 100°C/h. Les caractéristiques des produits obtenus sont les suivantes :
- Masse volumique après compactage : 6,4 g/cm⁻³.
- Masse volumique obtenue après frittage : 98 à 99 % de la masse volumique théorique.
- Perte au feu observée après frittage : comprise entre 1 et 2 %.
- Aspect métallographique après frittage : pas de fissure, porosité peu abondante et répartie uniformément.
- Taille moyenne des grains de la pastille frittée : comprise entre 8 et 15 µm.

La température correspondant à la vitesse maximale de densification par frittage est de 1280°C.

Ainsi, la poudre de UO₂ obtenue conformément à l'invention, présente des caractéristiques satisfaisantes avec des propriétés équivalentes ou mêmes améliorées par rapport à la poudre de UO₂ actuellement utilisée pour la fabrication de combustibles MOX. En particulier, elle présente une bonne compressibilité et une excellente frittabilité.

### Références citées

[1] : US-A-3 394 997
[2] : US-A-3 998 925
[3] : FR-A-2 088 170
[4] : FR-A-2 060 242
[5] : FR-A-2 064 351
[6] : FR-A-1 438 020
[7] : EP-A-0 092 475

## Revendications

1. Procédé de préparation d'une poudre de bioxyde d'uranium UO₂ frittable, qui comprend les étapes suivantes :
- 1) préparer une suspension aqueuse d'une poudre de UO₂ obtenue par voie sèche à partir d'hexafluorure d'uranium, ladite suspension comprenant 50 à 80% en poids de UO₂, au moins un agent défloculant et au moins un additif choisi parmi le peroxyde d'hydrogène H₂O₂ et une poudre de U₃O₈, en quantité telle que la viscosité de la suspension ne dépasse pas 250 mPa.s, et
- 2) atomiser cette suspension et la sécher dans un gaz chaud, à une température de 150 à 300°C, pour obtenir une poudre de UO₂ ayant une granulométrie moyenne de 20 à 100 µm.

2. Procédé selon la revendication 1, dans lequel la suspension comprend un agent défloculant et du peroxyde d'hydrogène H₂O₂, la quantité pondérale de H₂O₂ représentant 0,2 à 0,4% du poids de matière sèche de la suspension.

3. Procédé selon la revendication 1, dans lequel la suspension comprend un agent défloculant, du peroxyde d'hydrogène H₂O₂ et de plus un liant organique, la quantité pondérale de H₂O₂ représentant 0,1 à 0,4% du poids de matière sèche de la suspension, et la quantité pondérale de liant organique représentant 0,1 à 0,5% du poids de matière sèche de la suspension.

4. Procédé selon la revendication 1, dans lequel la suspension comprend de la poudre de U₃O₈, la quantité de U₃O₈ représentant 10 à 20% du poids UO₂.

5. Procédé selon la revendication 4, dans lequel la suspension comprend de plus un liant organique en quantité représentant 0,1 à 0,5% du poids de matière sèche de la suspension.

6. Procédé selon l'une quelconque des revendications 1 à 5, dans lequel l'agent défloculant est le polyméthacrylate d'ammonium.

7. Procédé selon l'une quelconque des revendications 1 à 6, dans lequel la quantité pondérale d'agent défloculant représente 0,03 à 0,16% du poids de matière sèche de la suspension.

8. Procédé selon la revendication 3 ou la revendication 5, dans lequel le liant organique est l'alcool polyvinylique ou le polyéthylène glycol.

9. Procédé selon l'une quelconque des revendications 1 à 8, dans lequel on ajoute à la suspension une faible quantité de poudre d'adjuvant de frittage et/ou de poison consommable.

10. Procédé selon l'une quelconque des revendications 1 à 9, dans lequel on soumet la suspension aqueuse à une agitation mécanique ou une agitation par ultrasons.

11. Procédé selon l'une quelconque de revendications 1 à 10, dans lequel l'atomisation de la suspension est effectuée au moyen d'un buse d'injection à ultrasons, d'une turbine ou d'une buse alimentée sous pression.

12. Procédé selon l'une quelconque des revendications 1 à 11, qui comprend un traitement thermique complémentaire de la poudre obtenue par atomisation-séchage, à une température de 100 à 700°C.

## Claims

1. Process for preparing a powder of sinterable uranium dioxide UO₂, which comprises the following stages:
1) preparing an aqueous suspension of a powder of UO₂ obtained by a dry process from uranium hexafluoride, said suspension comprising 50 to 80% by weight of UO₂ and at least one deflocculation agent and at least one additive chosen from among hydrogen peroxide H₂O₂ and a powder of U₃O₈, in quantity such that the viscosity of the suspension does not exceed 250 mPa.sec, and
2) atomizing said suspension and drying it in a hot gas, at a temperature of 150 to 300°C, to obtain a powder of UO₂ with an average particle size of 20 to 100 µm.

2. Process according to claim 1, in which the suspension comprises a deflocculation agent and hydrogen peroxide H₂O₂, the quantity by weight of H₂O₂ representing 0.2 to 0.4% of the weight of dry matter in the suspension.

3. Process according to claim 1, in which the suspension comprises a deflocculation agent, hydrogen peroxide H₂O₂ and also an organic binder, the quantity of H₂O₂ representing 0.1 to 0.4% of the weight of dry matter in the suspension, and the quantity by weight of organic binder representing 0.1 to 0.5% of the weight of dry matter in the suspension.

4. Process according to claim 1, in which the suspension comprises U₃O₈ powder, the quantity of U₃O₈ representing 10 to 20% of the UO₂ weight.

5. Process according to claim 4, in which the suspension also comprises an organic binder in a quantity representing 0.1 to 0.5% of the weight of dry matter of the suspension.

6. Process according to any one of claims 1 to 5, in which the deflocculation agent is ammonium polymethacrylate.

7. Process according to any one of claims 1 to 6, in which the quantity by weight of the deflocculation agent represents 0.03 to 0.16% of the weight of dry matter in the suspension.

8. Process according to claim 3 or claim 5, in which the organic binder is polyvinyl alcohol or polyethylene glycol.

9. Process according to any one of claims 1 to 8, in which one adds to the suspension a small quantity of powder of sintering admixture and/or burnable poison.

10. Process according to any one of claims 1 to 9, in which the aqueous solution is submitted to mechanical agitation or ultrasonic agitation.

11. Process according to any one of claims 1 to 10, in which the atomization of the suspension is carried out by means of an ultrasonic injection nozzle, a turbine or a nozzle fed under pressure.

12. Process according to any one of claims 1 to 11, which comprises a supplementary thermal treatment of the powder obtained by atomization-drying, at a temperature of 100 to 700°C.

## Patentansprüche

1. Verfahren zur Herstellung eines sinterbaren Urandioxid (UO₂)-Pulvers, das die folgenden Stufen umfasst:
- 1) Herstellung einer wässrigen Suspension eines UO₂-Pulvers, das auf trockenem Wege aus Uranhexafluorid hergestellt worden ist, wobei die Suspension 50 bis 80 Gew.-% UO₂, mindestens ein Dispergiermittel und mindestens ein Additiv, ausgewählt aus der Gruppe Wasserstoffperoxid (H₂O₂) und U₃O₈-Pulver, in einer solchen Menge enthält, dass die Viskosität der Suspension einen Wert von 250 mPa.s nicht übersteigt, und
- 2) Zerstäubung dieser Suspension und Trocknung derselben in einem heißen Gas bei einer Temperatur von 150 bis 300 °C zur Herstellung eines UO₂-Pulvers, das eine mittlere Teilchengröße von 20 bis 100 µm hat.

2. Verfahren nach Anspruch 1, worin die Suspension ein Dispergiermittel und Wasserstoffperoxid (H₂O₂) enthält, wobei die Gewichtsmenge des H₂O₂ 0,2 bis 0,4 Gew.-% der Trockensubstanz der Suspension darstellt.

3. Verfahren nach Anspruch 1, worin die Suspension ein Dispergiermittel, Wasserstoffperoxid (H₂O₂) und außerdem ein organisches Bindemittel enthält, wobei die Gewichtsmenge des H₂O₂ 0,1 bis 0,4 Gew.-% der Trokkensubstanz der Suspension darstellt und die Gewichtsmenge des organischen Bindemittels 0,1 bis 0,5 Gew.-% der Trockensubstanz der Suspension darstellt.

4. Verfahren nach Anspruch 1, worin die Suspension U₃O₈-Pulver enthält, wobei die U₃O₈-Menge 10 bis 20 % des Gewichts von UO₂ darstellt.

5. Verfahren nach Anspruch 4, worin die Suspension außerdem ein organisches Bindemittel in einer Menge enthält, die 0,1 bis 0,5 Gew.-% der Trockensubstanz der Suspension darstellt.

6. Verfahren nach einem der Ansprüche 1 bis 5, worin das Dispergiermittel Ammoniumpolymethacrylat ist.

7. Verfahren nach einem der Ansprüche 1 bis 6, worin die Gewichtsmenge des Dispergiermittels 0,03 bis 0,16 Gew.-% der Trockensubstanz der Suspension darstellt.

8. Verfahren nach Anspruch 3 oder 5, worin das organische Bindemittel Polyvinylalkohol oder Polyethylenglycol ist.

9. Verfahren nach einem der Ansprüche 1 bis 8, bei dem man der Suspension eine geringe Menge eines Sinteradjuvans-Pulvers und/oder verzehrbarenGiftstoffpulverszusetzt.

10. Verfahren nach einem der Ansprüche 1 bis 9, bei dem man die wässrige Suspension mechanisch rührt oder mittels Ultratchall rührt.

11. Verfahren nach einem der Ansprüche 1 bis 10, bei dem man die Zerstäubung der Suspension mittels einer Ultraschall-Injektionsdüse, einer Turbinendüse oder einer Druckbeschickurigsdüse durchführt.

12. Verfahren nach einem der Ansprüche 1 bis 11, das eine komplementäre thermische Behandlung des Pulvers umfasst, das durch Zerstäuben-Trocknen bei einer Temperatur von 100 bis 700 °C erhalten wurde.
